# EUROPEAN PATENT APPLICATION

(11) **EP 2 271 156 A1**
(43) Date of publication of application: **05.01.2011**
(21) Application number: 09164186.0
(22) Date of filing: 30.06.2009
(51) Int. Cl.: H04W 52/32, H04W 52/24, H04W 52/36

(54) **Interference management method between cognitive pilot channel base stations using power control**

(71) Applicant: NEC Corporation, Minato-ku Tokyo 108-8001 (JP)
(72) Inventor: Mouhouche, Belkacem, 91300 Massy (FR)
(74) Representative: Ilgart, Jean-Christophe

(57) **Abstract**

The invention relates to a method to avoid interference between signals transmitted by at least two different base stations over cognitive Pilot Channels (CPC) to UEs located in contiguous cells of wireless telecommunication network, each cell comprising a plurality of meshes, the transmission power of said signals being adjustable to different levels between a minimum level and a maximum level.

The method according to the invention comprises a step consisting of synchronizing said base stations so that they do not transmit signals with their respective maximum transmission power levels simultaneously.

## Description

### TECHNICAL DOMAIN

The invention pertains to the telecommunication field and concerns a method to avoid interference between signals transmitted by at least two different base stations over cognitive Pilot Channels (CPC) to UEs located in contiguous cells of wireless telecommunication network, each cell comprising a plurality of meshes, the transmission power of said signals to said meshes being adjustable to different levels between a minimum level and a maximum level.

The invention also concerns a base station broadcasting a Cognitive Pilot Channel (CPC) in a geographical area comprising a plurality of contiguous cells.

### STATE OF PRIOR ART

Cognitive Pilot Channel (CPC) is a concept used in cognitive radio to provide information to cognitive mobiles about the available operators, Radio Access Technologies (RAT) and Frequencies available in a geographical area.

Two Major concepts for Cognitive Pilot Channel are proposed by the E3 project and ETSI RRS Group: Mesh based and Optimized broadcast approach.
- Mesh based concept in which a cell in the geographical area is divided into a plurality of meshes and information is provided about operators, RAT and Frequencies available in each mesh.

Optimized broadcast concept in which information about all the RATs and frequencies available in the cells is transmitted.

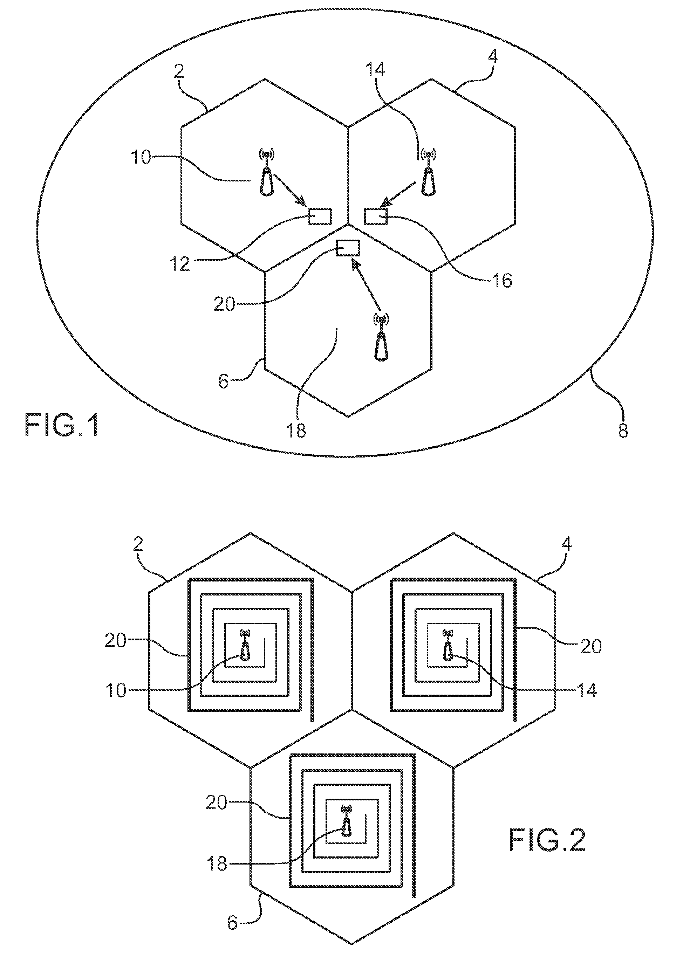

Figure 1 represents three cells referenced respectively 2, 4 and 6 in a geographical area 8 covered by at least one wireless telecommunication Network.

Cell 2 comprises a base station 10 and a mesh 12 located at its outer edge. Cell 4 comprises a base station 14 and a mesh 16 located at its outer edge. Cell 6 comprises a base station 18 and a mesh 20 located at its outer edge.

A technical problem results from the fact that if the base stations 10, 14 and 16 broadcast simultaneously CPC channels signals with a high transmission power, the reception of CPC information by UEs located in meshes 12, 16 and 20 can be affected by interferences due to reception by those UEs of signals transmitted by all the base stations located in the contiguous cells.

The present invention aims at reducing said interferences.

### PRESENTATION OF THE INVENTION

The basic concept of the method according to the invention consists in synchronously controlling and adjusting the transmission power of each base station.

This object is achieved by means of a method comprising a step consisting of synchronizing said base stations so that they do not transmit signals with their respective maximum transmission power levels simultaneously.

The method according to the invention comprises the following steps:
- determining for each mesh Mᵢ of a cell the distance dᵢ to the base station located in said cell,
- calculating for each mesh Mᵢ a transmission power Pᵢ as a function of said distance dᵢ,
- dynamically adjusting the transmission power level Pᵢ of each base station to a value Pᵢ that minimizes the interferences near the outer edges of said contiguous cells,
- broadcasting to each mesh Mᵢ said Cognitive Pilot Channel with the power Pᵢ.

Preferably, the calculated transmission power Pi for a mesh Mᵢ is weighted by an attenuation parameter depending on the topography of said mesh Mᵢ.

Said attenuation parameter is estimated when designing the CPC cell deployment and stored in a look-up table.

According to the invention, If the transmission power in a cell is equal to the maximum level, then the transmission power in the contiguous cells are adjusted to levels inferior to said maximum level.

The method according to the invention is implemented by a base station comprising means for adjusting the transmission power to a level adapted for limiting the interferences in the contiguous cells.

### BRIEF DESCRIPTION OF THE FIGURES

The forgoing summary, as well as the following detailed description, will be better understood when read in conjunction with the appended figures illustrating an exemplary embodiment of the invention in which:
- figure 1 described above, schematically illustrates the problem of prior art.
- figure 2, schematically illustrates the distribution of transmission power in a cell with regard to the distance to the base station located in said cell,
- Figure 3 schematically illustrates the transmission power control for each base station of figure 2 according to the invention,
- Figure 4-6 schematically illustrate the variation of the distribution of transmission power in contiguous cells according to the method of the invention.

### DESCRIPTION OF A DETAILED EMBODIMENT OF THE INVENTION

The invention will be explained when applied to base stations broadcasting a Cognitive Pilot Channel (CPC) in a geographical area 8 comprising a plurality of contiguous cells covered by at least one wireless telecommunication network.

For clarity purpose, only tree cells 2, 4 and 6 of the geographical area 8 are represented.

Identical references are used to designate elements common to the figures of the invention and to those of the prior art.

Transmission of the Cognitive Pilot Channel content to meshes located near the base station requires less power than transmission of this content to meshes located at the outer edge of the cell covered by the base station. Consequently, instead of transmitting the Cognitive Pilot Channel content with the same power to all the meshes of the geographical area, the power is distributed between said meshes to take into account the path loss that is likely to be seen by user equipment in the geographical area 8.

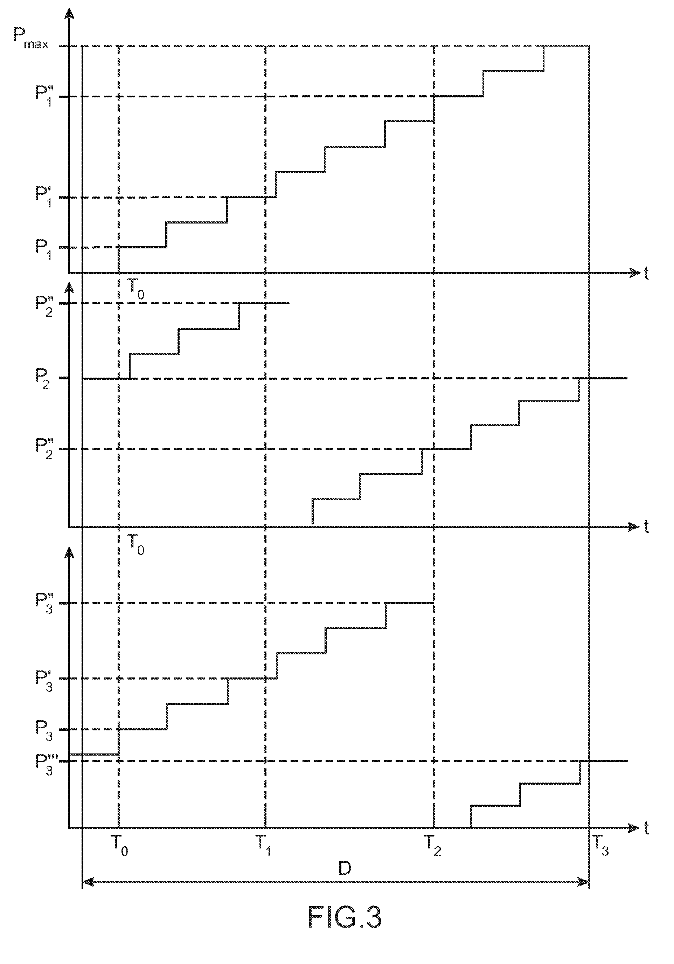

In figure 2, the thickness of line 20 representing the level of the transmission power increase as the distance from the base station increases. This means that the maximum power is used for transmitting CPC channels to the meshes located at the outer edge of the cells. To avoid interferences in these meshes, the transmission power of each base station 10, 14 and 18 is controlled as illustrated by figure 3 representing variation with time of transmission power P of base stations 10, 14 and 18 during a period D needed to serve all the meshes of a cell.

At time To, the transmission powers of base stations 10, 14 and 18 are adjusted respectively to the levels P1, P2 and P3. These levels P1, P2 and P3 are calculated so that a UE located in outer edge of a cell receive only the signals transmitted to the mesh belonging to said cell.

At time T1=D/3, the transmission powers of base stations 10, 14 and 18 are automatically adjusted respectively to the levels P'1, P'2 and P'3 the values of which are calculated so that to avoid interferences at the outer edge of the cells.

At time T2=2D/3, for base station 10, the transmission powers is adjusted to P'1, for base station 14 the transmission powers is adjusted to P'2, and for base station 18 it is adjusted to P'3. P'1, P'2 and P'3 are defined automatically according to the distance to the base stations in each cell and the variation of the transmission environment in each cell.

At T3=D, the transmission powers of base stations 10, 14 and 18 are identical to the transmission powers at T0.

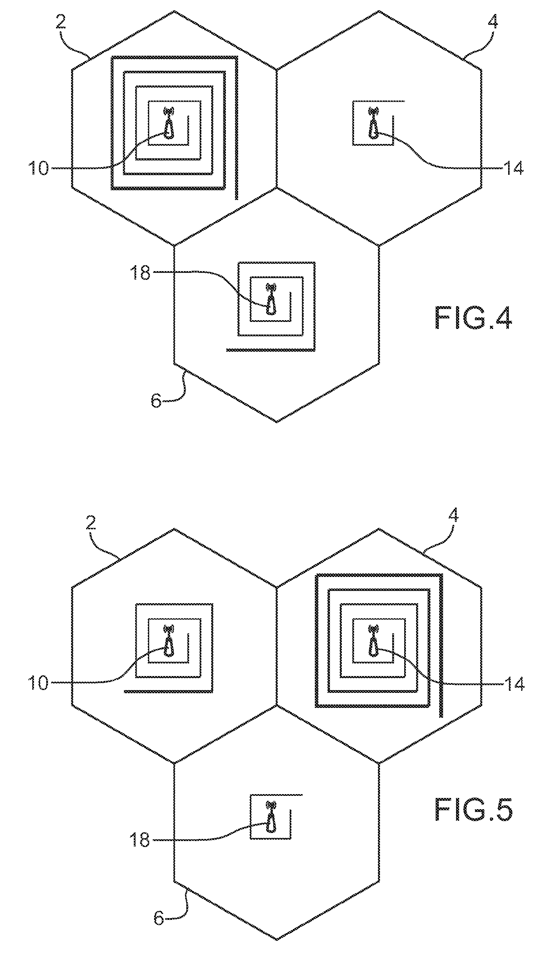

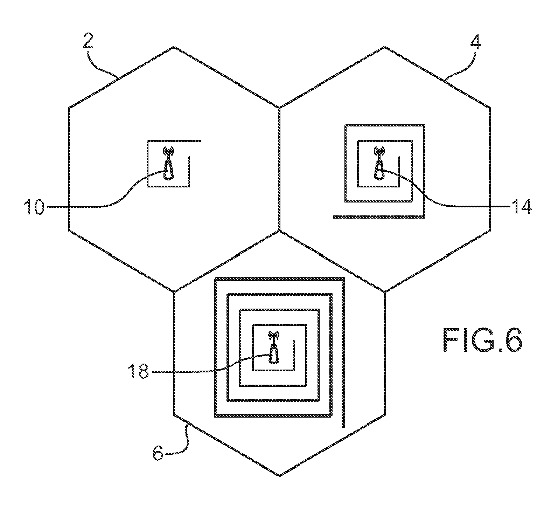

Figures 4, 5 and 6 illustrate respectively the shape of the transmission powers at T0, T1 and T3 in cells 2, 4 and 6.

## Claims

1. A method to avoid interference between signals transmitted by at least two different base stations (10, 14, 18) over cognitive Pilot Channels to User Equipments located in contiguous cells (2, 4, 6) of wireless telecommunication network, each cell (2, 4, 6) comprising a plurality of meshes Mᵢ, the transmission power of said signals to said meshes being adjustable to different levels between a minimum level and a maximum level, said method **characterized by** a step consisting of synchronizing said base stations (10, 14, 18) so that they do not transmit signals with their respective maximum transmission power levels simultaneously.

2. A method according to claim 1 further comprising the following steps:
- determining for each mesh Mᵢ of a cell (2, 4, 6) the distance dᵢ to the base station located in said cell,
- calculating for each mesh Mᵢ a transmission power Pᵢ according to said distance dᵢ,
- dynamically adjusting the transmission power level Pᵢ of each base station to a value that minimizes the interferences near the outer edges of said contiguous cells (2, 4, 6),
- broadcasting to each mesh Mᵢ said Cognitive Pilot Channel with the power Pᵢ.

3. A method according to claim 2 wherein said power Pi is inversely proportional to said distance dᵢ.

4. A method according to claim 2 wherein the calculated transmission power Pi for a mesh Mᵢ is weighted by an attenuation parameter depending on the topography of said mesh Mᵢ.

5. A method according to claim 4 wherein attenuation parameter is estimated when designing the CPC cell deployment and stored in a look-up table.

6. A method according to claim 1 wherein if the transmission power in a cell is equal to the maximum level, then the transmission power in the contiguous cells are adjusted to levels inferior to said maximum level.

7. A base station broadcasting a Cognitive Pilot Channel (CPC) in a geographical area comprising a plurality of contiguous cells (2, 4, 6) of a wireless telecommunication network, **characterized by** means for adjusting the transmission power to a level adapted for limiting the interferences in the contiguous cells (2, 4, 6).
